# EUROPEAN PATENT SPECIFICATION

(11) **EP 0 243 113 B1**
(45) Date of publication and mention of the grant of the patent: **02.11.1994**
(21) Application number: 87303396.3
(22) Date of filing: 16.04.1987
(51) Int. Cl.: G06F 11/26, G06F 15/78

(54) **Data processor**
Datenprozessor
Processeur de données

(30) Priority: 23.04.1986 JP 92031/86
(43) Date of publication of application: 28.10.1987
(73) Proprietor: HITACHI, LTD., Chiyoda-ku, Tokyo 100 (JP)
(72) Inventor: Akao, Yasushi, Ithaca New York 14850-2662 (US); Keida, Haruo, Tokorozawa-shi Saitama (JP); Hotta, Shinkichi, Higashiyamato-shi Tokyo (JP)
(74) Representative: Calderbank, Thomas Roger

(56) References cited:
- FR-A- 2 406 250
- US-A- 4 455 620
- Feger, O., "Ein-Chip-Microcomputer-Handbuch" 1983, Verlag Markt & Technik, pages 115-120

## Description

Generally, a processor is only integrated and formed on one semiconductor substrate in a general purpose multichip microprocessor. As described on pages 540 and 541 of "LSI HANDBOOK" published by OHM Corp. on Nov. 30th in 1984, a central processing unit, a read only memory (ROM) for storing programs, a random access memory (RAM) for storing data, and an I/O circuit for input and output of data and other functional blocks may be formed on a single semiconductor substrate. When such a system forms a single chip microcomputer, the number of wires can be significantly reduced as compared with the case where the system is formed by a general purpose multichip microprocessor. However, since an internal bus of the processor is also formed on the semiconductor substrate in the single chip microcomputer, the functional blocks are limited in use and it is not possible freely and directly to access the functional blocks from external devices.

When it is not possible freely to use the internal bus of the single chip microcomputer from the external devices and testing is performed on the single chip microcomputer, it is impossible to obtain direct access and testing of the functional blocks of the single chip microcomputer from the external devices. Hence, in order to perform testing of the functional block, it is necessary to use an instruction execution of the central processing unit (CPU) contained in the single chip microcomputer and time is therefore required for suitable processing steps. Therefore, there is a problem in that the efficiency for testing on the functional blocks should become lower.

Accordingly, the present invention seeks to provide a data processor in which the testing efficiency of the functional blocks may be improved.

FR-A-2406250 discloses a data processor including a central processing unit, at least one functional block coupled to the central processing unit by way of an internal bus, a buffer circuit connected to the internal bus, and connection means for selectively coupling the central processing unit to the internal bus; wherein
the central processing unit is arranged to produce a first address signal and a first further signal to the internal bus in accordance with a predetermined supply timing during a first mode of the data processor;
the buffer circuit is arranged to pass a second address signal and a second further signal from the outside of the processor to the at least one functional block via the internal bus bypassing the central processing unit during a second mode of the data processor such that the supply timing of the second address signal and second further signal to the internal bus in the second mode is identical with the predetermined supply timing of the first address signal and first further signal to the internal bus in the first mode, and the connection means is arranged to couple electrically the central processing unit to the internal bus in the first mode and to uncouple electrically the central processing unit from, the internal bus in the second mode

In FR-A-2406250, the further signals are data signals. Furthermore, FR-A-2406250 does not relate to a data processor which is a single chip microcomputer formed on a semiconductor substrate.

According to the present invention, however:
the data processor is a single chip microcomputer formed on a semiconductor substrate;
the at least one functional block is a plurality of functional blocks including a timer and a read-only memory; the first and second further signals are first and second read/write control signals, respectively; and the data processor is arranged to be selectively in the first mode or the second mode in response to an external test signal (φ-test) which is supplied from outside the data processor.

By using a processor according to the present invention address data may be supplied to the functional blocks from a tester for the data processor and the data required for the external devices may be read out directly from predetermined areas of the functional blocks via the buffer circuit, the testing efficiency of the functional blocks contained in the data processor can be improved.

An embodiment of the invention will now be described, by way of example, with reference to the accompanying drawings, in which:
Fig. 1 is a system block diagram of a single chip microcomputer which is an embodiment of a data processor according to the present invention;
Fig. 2 is a time chart showing input and output timing of signals in the case where the internal bus is used as the standard bus;
Fig. 3 is a system circuit diagram showing a concrete example of a control portion which controls input and output directions of an address signal in the buffer circuit.

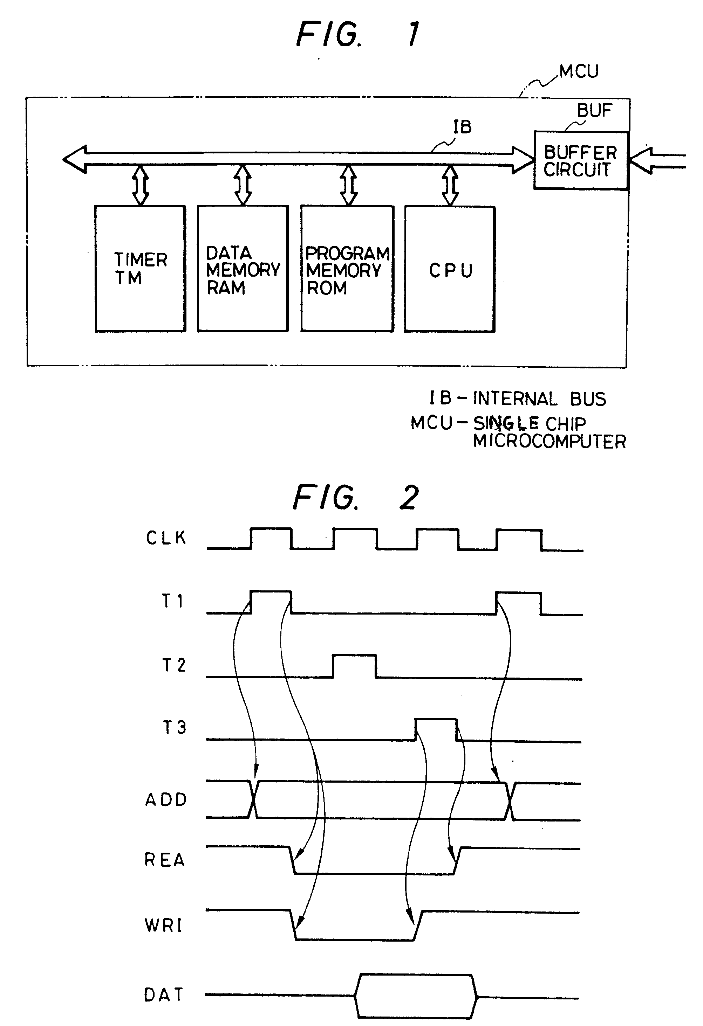

Fig. 1 is a block diagram of a single chip microcomputer which is an embodiment of the data processor according to the present invention. The single chip microcomputer shown in Fig. 1 is formed on a single semiconductor substrate in accordance with the known manufacturing techniques of semiconductor integrated circuits.

In a single chip microcomputer (MPU), functional blocks such as a central processing unit (CPU), a program memory ROM for storing programs, a data memory RAM in which data may be loaded and reloaded and a timer TM, are interconnected via an internal bus IB which is used as an I/O circuit. The internal bus IB is connectable to external devices such as peripheral devices via a buffer circuit BUF.

The detailed structure of the CPU is not shown in the drawing. However, when a microprogram system is employed, the CPU has a program counter which indicates the address of an instruction for execution, an instruction register in which an instruction read out from the program memory ROM is stored based on the output signal of the program counter, a decoder which decodes an instruction from the instruction register and an execution part which executes an instruction based on the control signal outputted from the decoder.

The internal bus IB has a predetermined number of data bus(es), address bus(es) and control bus(es). The present invention is not limited to specific structures of internal bus IB. However, the internal bus IB will normally act as a standard bus whose characteristics are predetermined in accordance with the intended use of the microcomputer. In this case a plurality of timing signals are generated sequentially based on a system clock signal which has a frequency with respect to an oscillator frequency of e.g. a crystal oscillator (not shown in the drawing) externally coupled to the single chip microcomputer MCU.
Alternatively the system clock signal may be supplied from an external device. The address signal, the data and the control signal are generated in accordance with the timing signals. For example, as shown in Fig. 2, three timing signals T1 to T3 may be used with respect to the system clock signal CLK. Then timing is set so that the predetermined address signal ADD is supplied to the address bus in one cycle period of the timing signal T1 and data DAT is supplied to the data bus with set-up times and hold times which are predetermined based on the leading edge timing of the timing signal T3. A read control signal REA is supplied to the control bus in the period between the trailing edge of the timing signal T1 and the trailing edge of the timing signal T3. In addition, a write control signal WRI is supplied to the control bus in the period between the trailing edge of the timing signal T1 and the leading edge of the timing signal T3. Thus, when the internal bus IB acts as a standard bus the timing management, determining the timing between the external devices (not shown in the drawing) and the internal parts of the single chip microcomputer MCU, becomes extremely simple.

In this case, the buffer circuit BUF has a normal constitution with respect to the relationship between the buffer circuit BUF and the external devices, i.e. a system constitution to be controlled by the single chip microcomputer MCU. In other words, the address signal supplied from the CPU is outputted via the address bus in the internal bus IB in order to select the external devices (not shown in the drawing) and a read/write (R/W) control signal for the external devices is outputted via the control bus therein. In this case, input/output (I/O) operations for the data bus are alternately switched and controlled in response to the R/W operations of the CPU. Hence the data bus becomes capable of inputting data supplied from the external devices when the CPU must read data from the external devices and the data bus becomes capable of outputting data supplied from the CPU when the CPU must write data to the external devices.

Since the functional blocks are capable, by the use of an external tester (not shown in the drawing), by accessing the functional blocks directly when the testing is carried out on those functional blocks contained in the single chip microcomputer MCU without the CPU, input and output of signals are controlled in inverted modes of the control modes described above in a test mode. In other words, the address bus and the control bus are capable of inputting the address signal and the control signal supplied from the tester when the test mode is instructed by the test signal supplied from the external tester. In addition, the data which is supplied to the data bus can be outputted to external devices when the read control signal is inputted as the control signal. Furthermore, the data which is supplied from the external devices can be inputted to the data bus when the write control signal is inputted as the control signal.

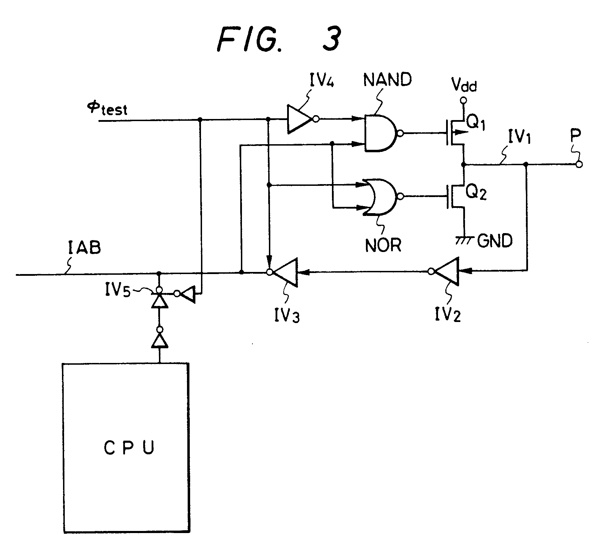

Details of the control part of the buffer circuit BUF, which controls the input and output directions of the address signal, is shown in Fig. 3, although the invention is not limited to this specific structure. As illustrated the buffer circuit BUF has a CMOS inverter circuit IV1 which has a p-channel MOSFET Q1 and a n-channel MOSFET Q2 as a final output portion, with the output terminal thereof connected to an external terminal P. The external terminal P is connected to an input terminal of an inverter circuit IV2 and is also connected to an address bus IAB via a clocked inverter circuit IV3 which is connected in series to the inverter circuit IV2. A test signal φ-test is applied to a control terminal of the circuit. The gate of the MOSFET Q1 is connected to the output terminal of a double input type NAND gate circuit NAND, and the gate of the MOSFET Q2 is connected to the output terminal of a double input type NOR gate circuit NOR. The input terminal of the NAND gate circuit NAND is connected to the address bus IAB and another input terminal thereof receives the test signal φ-test via an inverter circuit IV4. One input terminal of the NOR gate circuit NOR is connected to the address bus IAB and another input terminal thereof is supplied with the test signal φ-test. The address bus IAB is connected to address signal input terminals of the functional blocks including the timer TM, the data memory RAM and the program memory ROM, other than the CPU. Furthermore, an address signal output terminal of the CPU is coupled to the address bus IAB via a clocked inverter circuit IV5 in which the inverted signal of the test signal φ-test is supplied to the control terminal thereof.

The test signal φ-test is supplied from the tester (not shown in the drawing) and is supplied to the single chip microcomputer MCU via test pins, and the test mode is instructed when the level of the test signal φ-test is at a high level. When the single chip microcomputer MCU is used in any particular system, and controls that system, the signal from the tester is not supplied to the test pins and the test signal φ-test is at a low level. When the test signal φ-test is at the low level, the impedance of the clocked inverter circuit IV3 is at a high value, and the address bus IAB therefore becomes capable of inputting the address signal via the external terminal P. In addition, when the test signal φ-test is at the low level, the NAND gate circuit NAND and the NOR gate circuit NOR become capable of outputting signals in response to the level of the address signal which is supplied to the address bus IAB from the CPU. At that time, the address signal is outputted from the CPU and the buffer circuit BUF becomes capable of supplying the address signal to the external devices (not shown in the drawing) via the external terminal P. On the other hand, when the test signal φ-test is at the high level, the levels of the output signals of the NAND gate circuit NAND and the NOR gate circuit NOR are fixed so that the impedance of the CMOS inverter circuit IV1 is at a higher value, regardless of the level of the signal supplied from the address bus IAB. In addition, the clocked inverter circuit IV3 becomes capable of outputting signals in response to the level of the signal which is supplied to the external terminal. Therefore, the operation in the test mode is reverse to that in the control mode, and the address signal applied to the external terminal P can be supplied to the address bus IAB. In the buffer circuit BUF, the control part which controls the input and output directions of the control signal and another control part which controls the input and output directions of the data can have a structure generally similar that shown in Fig. 3.

When a test is performed on the functional blocks contained in the single chip microcomputer MCU, such as the program memory ROM, the data memory RAM or the timer TM, the buffer circuit BUF of the single chip microcomputer MCU is connected to the output terminal of the tester (not shown in the drawing). The tester includes a central processing unit for the test (not shown in the drawing) which controls the test operations. A reference clock signal of the central processing unit for the test is supplied to the single chip microcomputer and is used as the system clock signal of the single chip microcomputer MCU.

First, when the test signal φ-test which is supplied to the single chip microcomputer MCU from the tester (not shown in the drawing) is at the high level and the test mode is instructed, the buffer circuit BUF sets the input and output directions of the signals so that the central processing unit for the test (not shown in the drawing) contained in the tester can directly access the functional blocks contained in the single chip microcomputer MCU. In other words, the address bus and the control bus in the single chip microcomputer MCU become capable of inputting the address signal and the control signal respectively which are outputted from the tester. In this case, the data on the data bus becomes capable of being outputted to the external devices when the read control signal is supplied from the central processing unit for the test. Furthermore, the data supplied from the external devices becomes capable of being inputted to the data bus when the write control signal is supplied from the central processing unit for the test. Therefore, the address signal outputted from the central processing unit for the test is supplied to the internal bus IB via the buffer circuit BUF, and the predetermined area of the functional block which must be tested is selected by the address signal. In this case, when the read control signal is supplied to the functional block from the central processing unit for the test, the data is read out from that area and is passed through the buffer circuit BUF so as to be supplied to the central processing unit for the test. The data may then be subjected to suitable test processing. In addition, when a predetermined area of the functional block such as the data memory RAM, in which the data is stored reloadably, is selected and the write signal is supplied to that functional block from the central processing unit for the test, the data outputted from the central processing unit for the test is passed through the buffer circuit BUF and is written in the area of the functional block. Thus the data stored in the functional block may be corrected.

Therefore, when the test mode is set, the input and output directions of the signals in the buffer circuit BUF are reverse to those when the device is operating normally. For this reason, the central processing unit for the test can directly access the functional blocks contained in the single chip microcomputer MCU as if the functional blocks were peripheral devices of the central processing unit for the test.

The internal bus IB of the single chip microcomputer MCU according to the present embodiment may be a standard bus as described in Fig. 2. For this reason, when the central processing unit for the test supplies the address signal and the control signal to the single chip microcomputer MCU in response to the timing as shown in Fig. 2, it becomes possible to carry out read and write operations with respect to the functional blocks. When the specification of the internal bus is set to be identical to that of a standard bus, it becomes possible to standardise the operation timing including timing of the test operation of the single chip microcomputer even if the CPU and other functional blocks which constitute the single chip microcomputer are changed. Therefore, in any single chip microcomputers which are designed using custom ICs but of which the specifications are set to be identical to that of the standard bus, it is possible to perform testing on any kind of single chip microcomputer by the use of testers for which the test timing is basically the same.

According to the embodiment described above, the following effects may be obtained:
(1) When the test mode is set, the input and output directions of the signals in the buffer circuit BUF are reverse to those when the device is operating normally. For this reason, the central processing unit for the test can directly access the functional blocks as if the functional blocks were peripheral devices of the central processing unit for the test. Hence, it is not necessary to execute the instruction in the CPU contained in the single chip microcomputer supplied from the external devices and to perform the R/W operations in the functional blocks. This is advantageous over prior art arrangements where it is not possible to access to the functional blocks directly from external devices.
(2) With this effect the testing efficiency of the functional blocks in the single chip microcomputer can be improved.
(3) When the timing of the internal bus used in the single chip microcomputer is set to be identical to that of a standard bus, it becomes possible to standardise the operation timing including the timing of the test operation of the single chip microcomputer even if the CPU and other functional blocks which constitute the single chip microcomputer are changed respectively.
(4) Because of effect (3), in any single chip microcomputer which is designed with custom ICs but of which the specifications are set to be identical to that of a standard bus, it becomes possible to perform testing on any kind of single chip microcomputer by the use of testers of which test timing is basically the same.
(5) Because of effects (2) and (4), it is possible to obtain a synergetic effect in that the testing can be performed easily in the single chip microcomputer.

The embodiment of the present invention described above is illustrative of the present invention and not restrictive. Therefore, other embodiments and modification of the invention are possible within the scope of the invention.

For example, in the embodiment above the central processing unit contained in the single chip microcomputer employs a microprogram system. However, it is possible to change the microprogram system to a wired logic system. In addition, the specific constitution of the buffer circuit as an I/O circuit is not limited to the one described and any modification can be applied to the buffer circuit.

## Claims

1. A data processor (MCU) including a central processing unit (CPU), at least one functional block (TM, RAM, ROM) coupled to the central processing unit by way of an internal bus (IB), a buffer circuit (BUF) connected to the internal bus, and connection means for selectively coupling the central processing unit (CPU) to the internal bus (IB); wherein
the central processing unit (CPU) is arranged to produce a first address signal and a first further signal to the internal bus (IB) in accordance with a predetermined supply timing during a first mode of the data processor;
the buffer circuit (BUF) is arranged to pass a second address signal and a second further signal from the outside of the data processor to the at least one functional block via the internal bus (IB) bypassing the central processing unit (CPU) during a second mode of the data processor such that the supply timing of the second address signal and second further signal to the internal bus (IB) in the second mode is identical with the predetermined supply timing of the first address signal and first further signal to the internal bus (IB) in the first mode, and the connection means (IV₅) is arranged to couple electrically the central processing unit (CPU) to the internal bus (IB) in the first mode and to uncouple electrically the central processing unit (CPU) from, the internal bus (IB) in the second mode;
the data processor is arranged to be selectively in the first mode or the second mode in response to an external test signal (φ-test) which is supplied from outside the data processor;
the data processor is a single chip microcomputer formed on a semiconductor substrate;
at least one functional block is a plurality of functional blocks including a timer (TM) and a read-only memory (ROM); and
the first and second further signals are first and second read/write control signals, respectively.

2. A data processor according to claim 1, wherein the buffer circuit has output means (Q₁, Q₂, NAND, NOR) for supplying the first address signal and the first read/write control signal from the internal bus to the outside of the single chip microcomputer, and input means (IV₂, IV₃) for supplying the second address signal and second read/write signal from the outside of the single chip microcomputer to the internal bus.

3. A data processor according to claim 1 or claim 2, wherein the internal bus (IB) includes an address bus, a control bus, and a data bus.

4. A data processor according to any one of the preceding claims wherein the functional blocks include a random access memory (RAM) for storing data therein.

5. A data processor according to any one of the preceding claims wherein the connection means includes a clocked inverter circuit (IV₅).

6. A data processor according to claim 5 wherein the clocked inverter circuit (IV₅) has a control terminal coupled to receive said external test signal (φ-test) via a first inverter circuit.

7. A data processor according to any one of the preceding claims wherein the buffer circuit further includes a data input/output circuit, the input and output directions of data in the data input/output circuit being controlled by one of either the first read/write control signals or the second read/write control signals.

8. A data processor according to any one of the preceding claims further comprising a first external terminal for receiving said external test signal (φ-test).

9. A data processor according to claim 8 wherein the buffer circuit (BUF) includes:
a second external terminal (P);
a p-channel MOSFET (Q₁) having a source drain path coupled between a first supply voltage terminal (Vdd) and the second external terminal (P) and a gate;
an n-channel MOSFET (Q₂) having a source-drain path coupled between a second supply voltage terminal (GND) and the second external terminal and a gate;
a second inverter circuit (IV₂) having an input coupled to the second external terminal (P) and an output;
a second clocked inverter circuit (IV₃) having a control terminal coupled to receive the external test signal (φ-test), an input coupled to the output of the second inverter circuit, and an output coupled to the address bus (IAB);
a third inverter circuit (IV₄) having an input coupled to receive the external test signal (φ-test), and an output;
a double input type NAND circuit having an output coupled to the gate of the p-channel MOSFET and two inputs, one of which is coupled to the address bus (IAB) and the other of which is coupled to the output of the third inverter circuit (IV₄); and
a double input type NOR circuit having an output coupled to the gate of the n-channel MOSFET and two inputs, one of which is coupled to the address bus (IAB), and the other input of which is coupled to receive the external test signal (φ-test).

10. A data processor according to any one of the preceding claims wherein the second operating mode is a testing mode.

11. A method of operating a data processor, which data processor has a central processing unit (CPU), at least one functional block (TM, RAM, ROM) coupled to the central processing unit by way of an internal bus (IB) and a buffer circuit (BUF) connected to the internal bus (IB); in which method a first address signal and a first further signal are supplied from the central processing unit (CPU) to the internal bus (IB) in a first operating mode, and a second address signal and a second further signal are supplied from the outside of the processor to the functional blocks via the internal bus (IB) during a second operating mode; wherein:
the first and second address signal and the first and second further signals pass via the buffer circuit (BUF);
the supply timing of the second address signal and the second further signal to the internal bus (IB) in the second mode is identical with the supply timing of the first address signal and first further signal to the internal bus (IB) in the first operating mode; and
there is a connection means (IVₛ) controlling the coupling of the central processing unit (CPU) to the internal bus (IB) such that the central processing unit (CPU) is coupled electrically to the internal bus (IB) in the first mode and electrically uncoupled in the second mode, whereby the passage of the second address and second further signals to the functional blocks bypasses the central processing unit (CPU) in the second mode;
the data processor is a single chip microcomputer formed in a semiconductor substrate;
the at least one functional block is a plurality of functional blocks including a timer (TM) and a read-only memory (ROM);
the first and second further signals are first and second read/write control signals respectively; and
an external test signal (φ-test) is supplied to the data processor (MCU) to change the mode of the data processor (MCU) from the first operating mode to the second operating mode.

12. A method according to claim 11, wherein the data is input from the outside of the data processor (MCU) directly to one or more selected functional blocks via the internal bus not by the central processing unit (CPU) in response to the read/write control signal (REA/WRI) indicating a write mode in the second operating mode.

13. A method according to claim 11 or claim 12, wherein data is output from one or more selected functional blocks to the outside of the data processor (MCU) not by the central processing unit (CPU) in response to the read/write control signal (REA/WRI) indicating a read mode in the second operating mode.

14. A method according to any one of claims 11 to 13, wherein the single chip microcomputer couples to a tester which exists outside the single chip microcomputer.

## Patentansprüche

1. Datenprozessor (MCU) mit einer zentralen Verarbeitungseinheit (CPU), mindestens einem funktionellen Block (TM,RAM, ROM), der über einen internen Bus (IB) mit der zentralen Verarbeitungseinheit verbunden ist, einer Pufferschaltung (BUF), die an den internen Bus angeschlossen ist, und einer Anschlußeinrichtung zum selektiven Verbinden der zentralen Verarbeitungseinheit (CPU) mit dem internen Bus (IB); wobei
- die zentrale Verarbeitungseinheit (CPU) so ausgebildet ist, daß sie ein erstes Adreßsignal und ein erstes weiteres Signal für den internen Bus (IB) abhängig von einem vorgegebenen Lieferzeitpunkt während eines ersten Modus des Datenprozessors erzeugt;
- die Pufferschaltung (BUF) so ausgebildet ist, daß sie ein zweites Adreßsignal und ein zweites weiteres Signal von der Außenseite des Datenprozessors her über den internen Bus an (IB) zumindestens einen funktionellen Block unter Umgehung der zentralen Verarbeitungseinheit (CPU) während eines zweiten Modus des Datenprozessors so durchläßt, daß der Lieferzeitpunkt des zweiten Adreßsignals und des zweiten weiteren Signals an den Bus (IB) im zweiten Modus identisch mit dem vorgegebenen Lieferzeitpunkt des ersten Adreßsignals und des ersten weiteren Signals an den internen Bus (IB) im ersten Modus ist, und wobei die Anschlußeinrichtung (IV₅) so ausgebildet ist, daß sie die zentrale Verarbeitungseinheit (CPU) im ersten Modus elektrisch mit dem internen Bus (IB) verbindet und die zentrale Verarbeitungseinheit (CPU) im zweiten Modus vom internen Bus (IB) elektrisch trennt;
- der Datenprozessor so ausgebildet ist, daß er auf ein externes Testsignal (Φ-Test) hin, das von der Außenseite des Datenprozessors geliefert wird, selektiv im ersten Modus oder im zweiten Modus arbeitet;
- der Datenprozessor ein auf einem Halbleitersubstrat ausgebildeter Ein-Chip-Mikrocomputer ist;
- mindestens ein funktioneller Block eine Mehrzahl funktioneller Blöcke mit einem Timer (TM) und einem Festwertspeicher (ROM) bildet; und
- das erste und zweite weitere Signal ein erstes bzw. zweites Schreib/Lese-Steuersignal sind.

2. Datenprozessor nach Anspruch 1, bei dem die Pufferschaltung eine Ausgabeeinrichtung (Q₁, Q₂ NAND, NOR) zum Liefern des ersten Adreßsignals und des ersten Lese/Schreib-Steuersignals vom internen Bus zur Außenseite des Ein-Chip-Mikrocomputers sowie eine Eingabeeinrichtung (IV₂, IV₃) zum Liefern des zweiten Adreßsignals und des zweiten Lese/ Schreib-Signals von der Außenseite des Ein-Chip-Mikrocomputers zum internen Bus aufweist.

3. Datenprozessor nach Anspruch 1 oder Anspruch 2, bei dem der interne Bus (IB) einen Adreßbus, einen Steuerbus und einen Datenbus beinhaltet.

4. Datenprozessor nach einem der vorstehenden Ansprüche, bei dem die funktionellen Blöcke einen Direktzugriffsspeicher (RAM) zum Abspeichern von Daten in demselben beinhalten.

5. Datenprozessor nach einem der vorstehenden Ansprüche, bei dem die Anschlußeinrichtung eine getaktete Inverterschaltung (IV₅) beinhaltet.

6. Datenprozessor nach Anspruch 5, bei dem die getaktete Inverterschaltung (IV₅) über einen Steueranschluß verfügt, der so angeschlossen ist, daß er das genannte interne Testsignal (Φ-Test) über eine erste Inverterschaltung erhält.

7. Datenprozessor nach einem der vorstehenden Ansprüche, bei dem die Pufferschaltung ferner eine Daten-Eingabe/Ausgabe-Schaltung enthält, wobei die Eingabe- und Ausgaberichtung von Daten in der Daten-Eingabe/Ausgabe-Schaltung entweder durch das erste Schreib/Lese-Steuersignal oder das zweite Lese/Schreib-Steuersignal eingestellt wird.

8. Datenprozessor nach einem der vorstehenden Ansprüche, ferner mit einem ersten externen Anschluß zum Empfangen des genannten externen Testsignals (Φ-Test).

9. Datenprozessor nach Anspruch 8, bei dem die Pufferschaltung (BUF) folgendes beinhaltet:
- einen zweiten externen Anschluß (P);
- einen p-Kanal-MOSFET (Q₁) mit einem Source-Drain-Pfad, der zwischen einen ersten Spannungsversorgungsanschluß (Vdd) und den zweiten externen Anschluß (P) geschaltet ist und mit einem Gate;
- einen n-Kanal-MOSFET (Q₂) mit einem Source-Drain-Pfad, der zwischen einen zweiten Spannungsversorgungsanschluß (GND) und den zweiten externen Anschluß geschaltet ist, und mit einem Gate;
- eine zweite Inverterschaltung (IV₂) mit einem mit dem zweiten externen Anschluß (P) verbundenen Eingang und einem Ausgang;
- eine zweite getaktete Inverterschaltung (IV₃) mit einem Steueranschluß, der so angeschlossen ist, daß er das externe Testsignal (Φ-Test) erhält, einem mit dem Ausgang der zweiten Inverterschaltung verbundenen Eingang und einem mit dem Adreßbus (IAB) verbundenen Ausgang;
- eine dritte Inverterschaltung (IV₄) mit einem Eingang, der so angeschlossen ist, daß er das externe Testsignal (Φ-Test) erhält, und mit einem Ausgang;
- eine Doppeleingang-NAND-Stufe mit einem mit dem Gate des p-Kanal-MOSFETs verbundenen Ausgang und zwei Eingängen, von denen der eine mit dem Adreßbus (IAB) und der andere mit dem Ausgang der dritten Inverterschaltung (IV₄) verbunden ist;
- eine Doppeleingang-NOR-Stufe mit einem mit dem Gate des n-Kanal-MOSFETs verbundenen Ausgang und zwei Eingängen, von denen der eine mit dem Adreßbus (IAB) verbunden ist und der andere so angeschlossen ist, daß er das externe Testsignal (Φ-Test) erhält.

10. Datenprozessor nach einem der vorstehenden Ansprüche, bei dem der zweite Betriebsmodus ein Testmodus ist.

11. Verfahren zum Betreiben eines Datenprozessors, der eine zentrale Verarbeitungseinheit (CPU), mindestens einen Funktionsblock (TM, RAM, ROM), der mit der zentralen Verarbeitungseinheit über einen internen Bus (IB) verbunden ist, und eine Pufferschaltung (BUF) aufweist, die mit dem internen Bus (IB) verbunden ist; bei welchem Verfahren ein erstes Adreßsignal und ein erstes weiteres Signal von der zentralen Verarbeitungseinheit (CPU) in einem ersten Betriebsmodus an den internen Bus (IB) geliefert werden und ein zweites Adreßsignal und ein zweites weiteres Signal von der Außenseite des Prozessors über den internen Bus (IB) während eines zweiten Betriebsmodus an die funktionellen Blöcke geliefert werden; wobei:
- das erste und das zweite Adreßsignal und das erste und das zweite weitere Signal über die Pufferschaltung (BUF) laufen;
- der Lieferzeitpunkt des zweiten Adreßsignals und des zweiten weiteren Signals an den internen Bus (IB) im zweiten Modus mit dem Lieferzeitpunkt des ersten Adreßsignals und des ersten weiteren Signals an den internen Bus (IB) im ersten Betriebsmodus identisch ist; und
- eine Anschlußeinrichtung (IV₅) vorhanden ist, die den Anschluß der zentralen Verarbeitungseinheit (CPU) an den internen Bus (IB) in solcher Weise steuert, daß die zentrale Verarbeitungseinheit (CPU) im ersten Modus elektrisch mit dem internen Bus (IB) verbunden wird und im zweiten Modus elektrisch abgetrennt wird, wobei beim Durchlauf des zweiten Adreßsignals und des zweiten weiteren Signals an die funktionellen Blöcke die zentrale Verarbeitungseinheit (CPU) im zweiten Modus umgangen wird;
- der Datenprozessor ein in einem Halbleitersubstrat ausgebildeter Ein-Chip-Mikrocomputer ist;
- mindestens ein funktioneller Block eine Mehrzahl funktioneller Blöcke mit einem Timer (TM) und einem Festwertspeicher (ROM) bildet; und
- das erste und zweite weitere Signal ein erstes bzw. zweites Schreib/Lese-Steuersignal sind; und
- dem Datenprozessor (MCU) ein externes Testsignal (Φ-Test) zugeführt wird, um den Modus des Datenprozessors (MCU) vom ersten Betriebsmodus auf den zweiten Betriebsmodus zu ändern.

12. Verfahren nach Anspruch 11, bei dem die Daten von der Außenseite des Datenprozessors (MCU) auf das Lese/Schreib-Steuersignal (REA/WRI) hin, das anzeigt, daß der Schreibmodus im zweiten Betriebsmodus vorliegt, direkt an einen ausgewählten, funktionellen Block oder mehrere über den internen Bus und nicht über die zentrale Verarbeitungseinheit (CPU) eingegeben werden.

13. Verfahren nach Anspruch 11 oder 12, bei dem die Daten von einem ausgewählten Funktionsblock oder mehreren auf das Lese/Schreib-Steuersignal (REA/WRI), das den Lesemodus im zweiten Betriebsmodus anzeigt, zur Außenseite des Datenprozessors (MCU) nicht über die zentrale Verarbeitungseinheit (CPU) ausgegeben werden.

14. Verfahren nach einem der Ansprüche 11 - 13, bei dem der Ein-Chip-Mikrocomputer eine Verbindung zu einer Testeinrichtung herstellt, die außerhalb des Ein-Chip-Mikrocomputers vorliegt.

## Revendications

1. Processeur de données (MCU) comprenant une unité centrale de traitement (CPU), au moins un bloc fonctionnel (TM, RAM, ROM) couplé à l'unité centrale de traitement par l'intermédiaire d'un bus interne (IB), un circuit tampon (BUF) raccordé au bus interne, et des moyens de connexion permettant le couplage sélectif de l'unité centrale de traitement (CPU) au bus interne (IB); et dans lequel
l'unité centrale de traitement (CPU) est agencée de manière à envoyer un premier signal d'adresse et un premier autre signal au bus interne (IB) en fonction d'un cadencement d'alimentation prédéterminé pendant un premier mode de fonctionnement du processeur de données;
le circuit tampon (BUF) est agencé de manière à transmettre un second signal d'adresse et un second autre signal depuis l'extérieur du processeur de données à au moins un bloc fonctionnel par l'intermédiaire du bus interne (IB)en contournant l'unité centrale de traitement (CPU) pendant un second mode de fonctionnement du processeur de données, de sorte que le cadencement d'alimentation du second signal d'adresse et du second autre signal envoyés au bus interne (IB) pendant le second mode est identique au cadencement d'alimentation prédéterminé du premier signal d'adresse et du premier autre signal envoyés au bus interne (IB) dans le premier mode, et les moyens de connexion (IV₅) sont agencés de manière à coupler électriquement l'unité centrale de traitement (CPU) au bus interne (IB) dans le premier mode et à découpler électriquement l'unité centrale de traitement (CPU) du bus interne (IB) dans le second mode;
le processeur de données est agencé de manière à être sélectivement dans le premier mode ou dans le second mode en réponse à un signal de test externe (test φ) qui est envoyé à partir de l'extérieur du processeur de données;
le processeur de données est un micro-ordinateur monopuce formé sur un substrat semiconducteur;
au moins un bloc fonctionnel est formé d'une pluralité de blocs fonctionnels comprenant une horloge (TM) et une mémoire morte (ROM); et
les premier et second autres signaux sont respectivement des premier et second signaux de commande de lecture/enregistrement.

2. Processeur de données selon la revendication 1, dans lequel le circuit tampon possède des moyens de sortie (Q₁, Q₂, NAND, NOR) servant à envoyer le premier signal d'adresse et le premier signal de commande de lecture/enregistrement depuis le bus interne à l'extérieur du micro-ordinateur monopuce, et des moyens d'entrée (IV₂, IV₃) pour envoyer le second signal d'adresse et le second signal de lecture/enregistrement depuis l'extérieur du micro-ordinateur monopuce au bus interne.

3. Processeur de données selon la revendication 1 ou 2, dans lequel le bus interne (IB) contient un bus de transmission d'adresses, un bus de commande et un bus de transmission de données.

4. Processeur de données selon l'une quelconque des revendications précédentes, dans lequel les blocs fonctionnels comprennent une mémoire à accès direct (RAM) pour la mémorisation de données.

5. Processeur de données selon l'une quelconque des revendications précédentes, dans lequel les moyens de connexion comprennent un circuit inverseur (IV₅) commandé de façon cadencée.

6. Processeur de données selon la revendication 5, dans lequel le circuit inverseur (IV₅) commandé de façon cadencée possède une borne de commande couplée de manière à recevoir ledit signal de test externe (test φ) par l'intermédiaire d'un premier circuit inverseur.

7. Processeur de données selon l'une quelconque des revendications précédentes, dans lequel le circuit tampon comprend en outre un circuit d'entrée/sortie de données, les directions d'entrée et de sortie des données dans le circuit d'entrée/sortie de données étant commandées par l'un ou l'autre des premiers signaux de commande de lecture/enregistrement ou des seconds signaux de commande de lecture/enregistrement.

8. Processeur de données selon l'une quelconque des revendications précédentes, comportant en outre une première borne extérieure servant à recevoir ledit signal de test externe (test φ).

9. Processeur de données selon la revendication 8, dans lequel le circuit tampon (BUF) comprend :
une seconde borne externe (P);
un transistor MOSFET à canal p (Q₁) possédant une voie source-drain branchée entre une première borne de tension d'alimentation (Vdd) et la seconde borne externe (P) et une grille;
un transistor MOSFET à canal n (Q₂) possédant une voie source-drain branchée entre une seconde borne de tension d'alimentation (GND) et la seconde borne externe et une grille;
un second circuit inverseur (IV₂) possédant une entrée accouplée à la seconde borne externe (P) et une sortie;
un second circuit inverseur (IV₃) commandé de façon cadencée, qui possède une borne de commande couplée de manière à recevoir le signal de test externe (test φ), une entrée couplée à la sortie du second circuit inverseur, et une sortie couplée au bus de transmission d'adresses (IAB);
un troisième circuit inverseur (IV₄) possédant une entrée couplée de manière à recevoir le signal de test externe (test φ) et une sortie;
un circuit NON-ET du type à deux entrées et comportant une sortie couplée à la grille du transistor MOSFET à canal p et deux entrées, dont l'une est couplée au bus de transmission d'adresses (IAB) et dont l'autre est couplée à la sortie du troisième circuit inverseur (IV₄); et
un circuit NON-OU du type à deux entrées, qui comporte une sortie couplée à la grille du transistor MOSFET à canal n et deux entrées, dont l'une est couplée au bus de transmission d'adresses (IAB) et dont l'autre est couplée de manière à recevoir le signal de test externe (test φ).

10. Processeur de données selon l'une quelconque des revendications précédentes, dans lequel le second mode de fonctionnement est un mode de test.

11. Procédé pour faire fonctionner un processeur de données, lequel processeur de données possède une unité centrale de traitement (CPU), au moins un bloc fonctionnel (TM, RAM, ROM) couplé à l'unité centrale de traitement par l'intermédiaire d'un bus interne (IB) et un circuit tampon (BUF) raccordé au bus interne; procédé dans lequel un premier signal d'adresse et un premier autre signal sont envoyés par l'unité centrale de traitement (CPU) au bus interne (IB) dans un premier mode de fonctionnement, et un second signal d'adresse et un second autre signal sont délivrés à partir de l'extérieur du processeur aux blocs fonctionnels par l'intermédiaire du bus interne (IB) pendant un second mode de fonctionnement; et dans lequel :
les premier et second signaux d'adresses et les premier et second autres signaux traversent le circuit tampon (BUF);
le cadencement d'alimentation du second signal d'adresse et du second autre signal envoyés au bus interne (IB) pendant le second mode est identique au cadencement d'alimentation du premier signal d'adresse et du premier autre signal envoyés au bus interne (IB) pendant le premier mode de fonctionnement; et
il est prévu des moyens de connexion (IVₛ) commandant le couplage de l'unité centrale de traitement (CPU) au bus interne (IB) de telle sorte que l'unité centrale de traitement (CPU) est couplée électriquement au bus interne (IB) dans le premier mode et est découplée électriquement dans le second mode, la transmission du second signal d'adresse et du second autre signal aux blocs fonctionnels contournant l'unité centrale de traitement (CPU) dans le second mode;
le processeur de données est un microprocesseur monopuce formé sur un substrat semiconducteur;
le au moins un bloc fonctionnel est formé par une pluralité de blocs fonctionnels comprenant une horloge (TM) et une mémoire morte (ROM);
les premier et second signaux sont respectivement des premiers et seconds signaux de commande de lecture/enregistrement; et
un signal de test externe (test φ) est envoyé au processeur de données (MCU) pour commuter le processeur de données (MCU) du premier mode de fonctionnement au second mode de fonctionnement.

12. Procédé selon la revendication 11, selon lequel les données sont introduites à partir de l'extérieur du processeur de données (MCU), directement dans un ou plusieurs blocs fonctionnels sélectionnés, par l'intermédiaire du bus interne, et non par l'unité centrale de traitement (CPU), en réponse au signal de commande de lecture/enregistrement (REA/WRI) indiquant un mode d'enregistrement dans le second mode de fonctionnement.

13. Procédé selon la revendication 11 ou 12, dans lequel des données sont délivrées à partir d'un ou de plusieurs blocs fonctionnels sélectionnés, en direction de l'extérieur du processeur de données (MCU), non par l'unité centrale de traitement (CPU), en réponse au signal de commande de lecture/d'enregistrement (REA/WRI) indiquant un mode de lecture dans le second mode de fonctionnement.

14. Procédé selon l'une quelconque des revendications 11 à 13, selon lequel le micro-ordinateur monopuce est accouplé à un dispositif de test, qui est présent à l'extérieur du micro-ordinateur monopuce.
